Europäisches Patentamt

European Patent Office

Office européen des brevets

(19)

(11) Veröffentlichungsnummer: **0 152 916 B1**

(12) **EUROPÄISCHE PATENTSCHRIFT**

(45) Veröffentlichungstag der Patentschrift: **04.12.91**

(51) Int. Cl.⁵: **G01P 5/00**

(21) Anmeldenummer: **85101601.4**

(22) Anmeldetag: **14.02.85**

(54) **Laser-Doppler-Anemometer.**

(30) Priorität: **21.02.84 DE 3406142**
**27.09.84 DE 3435423**

(43) Veröffentlichungstag der Anmeldung:
**28.08.85 Patentblatt 85/35**

(45) Bekanntmachung des Hinweises auf die
Patenterteilung:
**04.12.91 Patentblatt 91/49**

(84) Benannte Vertragsstaaten:
**DE FR GB IT NL**

(56) Entgegenhaltungen:
**DE-A- 2 737 345**
**FR-A- 2 177 476**

**APPL. PHYS. LETT., Band 33, Nr. 9, 1. November 1978, Seiten 835,836, American Institute of Physics, New York, US; E.J. SHAUGHNESSY et al.: "GaAlAs diode sources for laser-Doppler anemometry"**

**ELECTRONICS LETTERS, Band 18, Nr. 22, 28. Oktober 1982, Seiten 967-969, London, GB; J.D.C. JONES et al.: "Miniature solid-state directional laser doppler velocimeter"**

**Electronics Letters, Vol. 16, No. 18, S.**

**709-710**

(73) Patentinhaber: **Bundesrepublik Deutschland, vertreten durch den Bundesminister für Wirtschaft, dieser vertreten durch den Präsidenten**
**der Physikalisch-Technischen Bundesanstalt Bundesallee 100**
**W-3300 Braunschweig(DE)**

(72) Erfinder: **Dopheide, Dietrich, Dr.**
**Leimenweg 7**
**W-3300 Braunschweig(DE)**

(74) Vertreter: **Lins, Edgar, Dipl.-Phys. et al**
**Patentanwälte Gramm + Lins Theodor-Heuss-Strasse 2**
**W-3300 Braunschweig(DE)**

## Beschreibung

Die Erfindung betrifft ein Laser-Doppler-Anemometer zur Messung von Geschwindigkeiten bewegter Meßobjekte mit einer durch wenigstens eine Laserdiode gebildeten Laserstrahlquelle, einer Umlenkoptik für wenigstens zwei Teilstrahlen einer Sammeloptik zur Fokussierung wenigstens eines der Teilstrahlen auf das Meßobjekt und mit einem Detektor für das vom bewegten Meßopjekt ausgesandten Streulicht.

Laser-Doppler-Anemometer sind bekannt und Ihre Meßprinzipien in Durst, Melling, Whitelaw "Principles and Practice of Laser-Doppler-Anemometry", 2. Auflage, Academic Press 1981, ausführlich beschrieben.

Bei dem bekannten Laser-Doppler-Anemometer wird der Strahl eines Gaslasers in zwei Teilstrahlen aufgeteilt. Beim Kreuzstrahlverfahren werden die beiden Teistrahlen unter verschiedenen Winkeln auf ein strömendes Medium gerichtet, wo sie in dem Meßvolumen ein virtuelles Interferenzmuster erzeugen. Die direkt durch das Meßvolumen laufenden Strahlen werden abgeblockt, während die vom Meßvolumen in eine andere Richtung gestreuten Strahlen mit Hilfe eines Fotomultipliers detektiert werden. Die Frequenz des gestreuten Lichts ist von der Geschwindigkeit des bewegten Meßobjektes abhängig, so daß eine Messung der Strömungsgeschwindigkeit möglich ist.

Beim Referenzstrahlverfahren durchläuft nur ein Teilstrahl das Meßvolumen. Der gestreute Teilstrahl wird mit einem Referenzstrahl zur Interferenz gebracht.

Die Meßmethode der Anemometrie weist den Vorteil auf, daß sie für praktische Zwecke völlig rückwirkungsfrei auf das bewegte Meßobjekt, das beispielsweise durch ein strömendes Medium oder durch eine bewegte Oberfläche gebildet sein kann, ausgeübt werden kann. Es ist lediglich erforderlich, daß das bewegte Meßobjekt lichtstreuende Teilchen aufweist. Diese können einer Gas- oder Flüssigkeitsströmung auch vor der Messung beigegeben werden.

Der Nachteil der bisherigen Anemometer ist im wesentlichen darin zu sehen, daß der Aufbau mit den Gaslasern sehr voluminös und schwer ist. Zur Ausrichtung der Teilstrahlen in das Meßvolumen muß dabei bei feststehenden Umlenkoptik der Laser verschoben werden, so daß eine aufwendige Verschiebeeinrichtung für den Laser erforderlich ist. Gleiches gilt für die Empfangsoptiken.

Aus Appl. Phys. Lett. 33 (9) Seiten 835 bis 836 ist es grundsätzlich bekannt, Laser-Doppler-Anemometer mit einer Laserdiode zu betreiben. Dabei enstehen allerdings Probleme aufgrund der geringen Kohärenzlänge der von üblichen Laserdiodenanordnungen ausgestrahlte Strahlung. Der Aufbau erfordert daher eine genaue Abstimmung der Weglängen der beiden Teilstrahlen, um ein verwertbares Interferenzstreifensystem am Meßort zu erzeugen. In der Praxis zeigte sich darüber hinaus, daß der Aufbau eines Anemometers mit Laserdioden erhebliche Probleme mit sich bringt, da die Laserdioden regelmäßig nicht stabil genug emittieren, um zuverlässig brauchbare anemometrische Meßresultate zu erzeugen. Laserdioden arbeiten regelmäßig im Multimode-Betrieb. Selbst wenn Single-Mode-Laserdioden ausgewählt werden, findet bei diesen Dioden häufig ein Mode-Hopping statt, das zu einer sprunghaften Änderung der Laserfrequenz und somit zu starken Beeinträchtigungen der Messungen führt. Das Mode-Hopping bewirkt auch eine starke Verschlechterung des Signal-Rausch-Verhältnisses der Laser-Doppler-Signale. In Electronic Letters, vol. 18 (1982) Seiten 967 bis 969 ist eine Anwendung eines Laserdioden-Anemometers beschrieben. Maßnahmen zur Frequenzstabilisierung sind für den Normalfall nicht offenbart. Für die Erhöhung der Kohärenzlänge wird eine optische Rückkopplung des Laserlichts vorgeschlagen.

Aus Electonic Letters, vol. 16 (1980), Seiten 709 bis 710 ist es bekannt, für Heterodyn-Übertragungssysteme Laserdioden im Hochfrequenzbereich zu stabilisieren. Hierzu wird das Licht einer Laserdiode in zwei Strahlengänge aufgeteilt, wobei in einen Strahlengang ein Fabry-Perot-Interferometer eingeschaltet ist, das Frequenzänderungen bekanntlich in Intensitätsänderungen umsetzt. In dem anderen Strahlengang ist ein optischer Abschwächer eingeschaltet, der die Intensität dieses Teilstrahles so einstellt, daß sie etwa der halben maximalen Intensität am Ausgang des Fabry-Perot-Interferometers entspricht. In beiden Strahlengängen setzt jeweils eine Fotodiode die empfangene Intensität in proportionale elektrische Signale um, die als Eingangssignale eines Differenzverstärkers fungieren. Bei der Soll-Frequenz der Laserdiode erzeugt der Differenzverstärker kein Ausgangssignal. Bei einer abweichenden Laserfrequenz erzeugt der Differenzverstärker ein Ausgangssignal, das über einen Widerstand dem Speisestrom für die Laserdiode überlagert wird. Durch Variation des in die Laserdiode eingespeisten Stromes wird die Ausgangsfrequenz des Lasers konstant gehalten. Die Temperatur der Laserdiode wird durch eine Temperaturstabilisierung mit einem Peltier-Element konstant gehalten.

Durch DE A 2 737 345 ist es bekannt, die Ausgangsintensität einer Laserdiode dadurch zu stabilisieren, daß die Laserdiode temerpaturstabilisiert montiert ist und die Ausgangsleistung optisch detektiert und für die Regelung des Treiberstroms der Laserdiode verwendet wird.

Der Erfindung liegt die Aufgabe zugrunde, ein Laser-Doppler-Anemometer der eingangs erwähnten Art so auszubilden, daß es für praktische Anwendungsfälle und mit einem realistischen Aufwand mit einer Laserdiode betrieben werden kann.

Diese Aufgabe wird mit einem Laser-Doppler-Anemometer der eingangs erwähnten Art dadurch gelöst, daß die Stabilisierung des aus der Laserdiode austretenden Lasterstrahls dadurch erfolgt, daß die Laserdiode mit einem geregelten Konstantstrom betrieben und durch einen Temperaturregelkreis auf einer konstanten Temperatur haltbar ist.

Erfindungsgemäß findet eine Stabilisierung der Frequenz des Laserstahls der Laserdiode dadurch statt, daß sowohl die Arbeitstemperatur, als auch der durch die Laserdiode fließende Strom konstant gehalten werden. Es hat sich gezeigt, daß mit diesen Maßnahmen ein praktikabler Aufbau eines Anemometers mit einer Laserdiode möglich ist, ohne daß hierfür eine aufwendige optische Rückkopplung erforderlich wäre.

Der erfindungsgemäße Aufbau bietet den Vorteil, daß die Ausgangsfrequenz der Laserdiode einstellbar ist. Dies geschieht erfindungsgemäß unter Verwendung der geregelten Konstantstromquelle mit Hilfe des Temperaturregelkreises, mit dem die Temperatur der Laserdiode nicht nur auf einem vorbestimmten Wert haltbar ist, sondern auch auf andere Werte einstellbar ist, wodurch sich die Laserfrequenz ändert. Hierdurch werden Vorteile insbesondere in einer Anordnung erzielt, in der zur Messung von mehreren Geschwindigkeitskomponenten des bewegten Meßobjektes mehrere Anemometer-Systeme gleichzeitig Teilstrahlen auf das Meßobjekt senden und die gestreuten Strahlen wieder voneinander trennbar sein sollten.

In einer mechanisch besonders vorteilhaften Ausführungsform ist die Laserdiode auf einem Montageblock montiert, in den ein Temperaturfühler und ein Element zur stromgesteuerten Erzeugung von Wärme und Kälte, vorzugsweise ein Peltier-Element, eingebaut ist.

Eine komplikationslose Messung wird mit den Laserdioden dann erreicht, wenn diese so ausgewählt sind, daß sie im Monomode-Betrieb arbeiten. In diesem Fall reicht die Kohärenzlänge sicher aus, um die erforderlichen Interferenzmuster zu erzeugen.

Durch die geringe Größe der Laserdiode kann in einer vorteilhaften Anordnung eine in der optischen Achse liegende Geschwindigkeitskomponente gemessen werden, in dem die Laserdiode außerhalb der optischen Achse angeordnet ist und schräg durch das Meßvolumen hindurchlaufende Strahl umgelenkt wird und das Meßvolumen unter einem anderen Winkel nochmals durchläuft. Die Detektion kann dann bequem in Richtung der optischen Achse vorgenommen werden.

Diese Anordnung ermöglicht zusammen mit der herkömmlichen Anordnung für die Messung einer Geschwindigkeitskomponente die Messung dreier Geschwindigkeitskomponenten, wenn drei Laserstrahlen vorgesehen sind, von denen zwei in der herkömmlichen Weise in der optischen Achse angeordnet sind und ihre Teilstrahlen in um beispielsweise 90° zueinander gedrehten Ebenen erzeugt werden und die dritte Laserstrahllichtquelle außerhalb der optischen Achse zur Messung der Geschwindigkeitskomponente parallel zur optischen Achse angeordnet ist. Dabei strahlen die beiden in der optischen Achse angeordneten Laserstrahlquellen auf verschiedenen Wellenlängen.

Durch die erfingsgemäß mögliche kompakte Anordnung ist es auch möglich, eine dritte, schräg zu den beiden anderen Geschwindigkeitskomponenten verlaufende Geschwindigkeitskomponenten zu messen, indem ein herkömmliches Anemometersystem mit einer schräg zur optischen Achse der beiden anderen Laserstrahlquellen verlaufenden optischen Achse aufgebaut wird.

In einer außerordenlich vorteilhaften Weiterbildung der Erfindung dient als Laserstrahlquelle eine Laser-Doppel-Diode, die auf einem gemeinsamen Substrat in um 180° zueinander stehende Richtungen abstrahlt. In diesem Fall können die zur Aufteilung des Lichtes der Laserstrahlquelle in zwei Teilstrahlen erforderlichen Strahlteiler entfallen, wodurch der Aufbau noch kompakter und einfacher zu bewerkstelligen wird.

Die Erfindung soll im folgenden anhand von in der Zeichnung dargestellten Ausführungsbeispielen näher erläutert werden. Es zeigen:

Figur 1: den schematischen Aufbau eines erfindungsgemäßen Laser-Doppler-Anemometers mit der Anordnung einer Laserdiode als Laserstrahlquelle in der optischen Achse;

Figur 2: den Strahlengang für die Anordnung der Laserdiode außerhalb der optischen Achse zur Messung einer in der optischen Achse liegenden Geschwindigkeitskomponente;

Figur 3: eine schematische, räumliche Darstellung für eine Anordnung zur Untersuchung von drei orthogonal zueinander stehenden Geschwindigkeitskomponenten;

Figur 4: eine schematische Darstellung einer Anordnung zur Messung von orthogonal zur optischen Achse stehenden Geschwindigkeitskomponenten und einer dritten, schräg zur optischen Achse stehenden Geschwindigkeitskomponente;

Figur 5: eine zu Figur 1 analoge Anordnung eines Laser-Doppler-Anemometers mit einer Laser-Doppel-Diode als Laserstrahlquelle;

Figur 6:    eine durch Weglassung einer Fokus-
            sierlinse vor dem Meßvolumen ge-
            bildete Variante der Anordnung aus
            Figur 5;

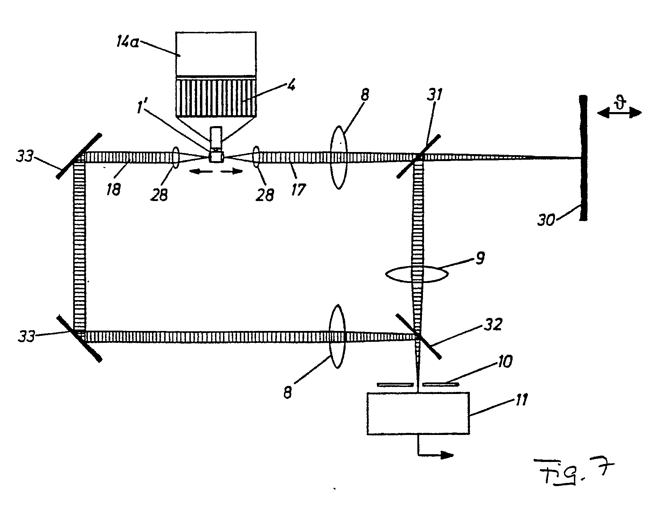

Figur 7:    eine Anordnung eines erfindungsgemäßen Laser-Doppler-Anemometers
            mit einer Laser-Doppeldiode zur
            Durchführung des Referenzstrahl-
            verfahrens zur Messung der Ge-
            schwindigkeit einer bewegten Ober-
            fläche.

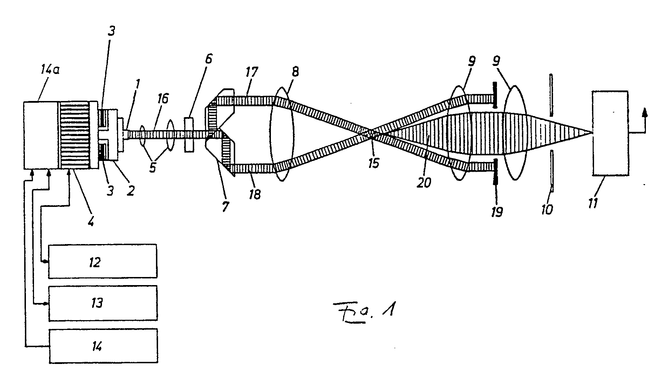

In der in Figur 1 gezeigten grundsätzlichen Anordnung wird der aus einer Laserdiode 1 austretende divergente Laserstrahl 16 mittels eines Mikroskopobjektivs oder Sammellinsen 5 gebündelt und über einen Strahlteiler 7 in zwei parallele Teilstrahlen 17 und 18 gleicher Intensität aufgeteilt. Die Teilstrahlen 17,18 werden über eine Linse 8 in den Brennpunkt 15 fokussiert, der das Meßvolumen des Laser-Doppler-Anemometers darstellt. Der ungestreut durch das Meßvolumen 15 laufende Anteil der Teilstrahlen 17,18 wird von Strahlfallen 19 aufgefangen. Das etwa in Richtung der optischen Achse vom Meßvolumen 15 ausgehende Streulicht 20 wird über Linsen 9 und eine Blende 10 auf einen Fotomultiplier 11 gelenkt.

Der Astigmatismus des von der Laserdiode ausgehenden Strahls 16 kann durch ein anamorphisches Prismenpaar 6 weitestgehend beseitigt werden, falls dies gewünscht wird. Alternativ kann anstelle des Prismenpaars 6 auch ein System von gekreuzten Zylinderlinsen zur Erzielung einer anamorphotischen Abbildung verwendet werden.

Die Laserdiode 1 ist auf einem Montageblock 2 montiert, der wiederum auf Peltier-Elementen 3 befestigt ist. Die von den Peltier-Elementen 3 erzeugte Wärme wird über einen Kühlkörper 4 abgeführt. Mit dem Montageblock 2 und den Peltier-Elementen 3 ist ein Temperaturregelkreis 12 verbunden, der eine genaue Temperaturstabilisierung und damit eine Wellenlängenstabilisierung der Laserdiode 1 vornimmt. Der Sollwert der Temperatur kann an dem Temperaturregelkreis eingestellt werden, so daß eine Wellenlängenabstimmung der Laserdiode 1 möglich ist, da die abgestrahlte Wellenlänge von der Temperatur der Laserdiode 1 abhängt. Über eine Konstantstromregelung 13 wird der der Laserdiode aufgeprägte Betriebsstrom eingestellt und einem Anpassungsnetzwerk 14a der Laserdiode 1 zugeführt, wodurch die Lichtleistung der Laserdiode 1 kontinuierlich einstellbar ist.

Ein Modulationsgenerator 14 ermöglicht in Verbindung mit dem Netzwerk 14a eine Frequenz- und Intensitätsmodulation des Laserlichts im Nieder- und Hochfrequenzbereich durch eine Strommodulation um einen Arbeitspunkt, der von der Stromregelung 13 vorgegeben wird. Diese Intensitätsmodulation des Laserlichtes bewirkt im Fotomultiplier 11 eine Frequenzmischung der Dopplerfrequenz, die ein Maß für die Strömungsgeschwindigkeit darstellt, mit der Frequenz des Modulationsgenerators 14. Dadurch entsteht ein neues Verfahren zur Frequenzverschiebung von Dopplersignalen, das mit Gaslasern nicht realisierbar war.

Es ist vorteilhaft, wenn die Laserdiode 1 in nur einer transversalen Mode abstrahlt, um ein Meßvolumen 15 zu erzielen, das eine symmetrische und etwa gaußförmige Intensitätsverteilung aufweist. Werden Laserdioden mit einem Verhältnis der Strahldivergenzen kleiner 1 : 3 ausgewählt, kann in den meisten Anwendungsfällen der Strömungsmeßtechnik eine Verringerung des Astigmatismus durch die anamorphotischen Prismen 6 oder ähnliche Anordnungen entfallen.

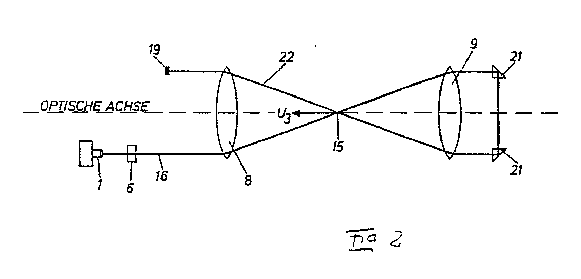

Werden Laserdioden 1 verwendet, die auf mehreren longitudinalen Moden abstrahlen, muß ein eingesetzter Strahlteiler 7 weglängenkompensiert sein, um interferenzfähige Teilstrahlen 17,18 zu erzeugen. Laserdioden 1 mit nur einer longitudinalen Mode benötigen keine weglängenkompensierten Strahlteiler 7 und sind aufgrund der erzielbaren großen Kohärenzlänge von mehr als 8 m besonders zur Messung einer in der optischen Achse liegenden Geschwindigkeitskomponente geeignet, wie sie anhand der Figur 2 näher erläutert werden soll.

Für die Messung der Geschwindigkeitskomponente $u_3$, die in der optischen Achse liegt, ist die Laserdiode 1 außerhalb der optischen Achse angeordnet. Der Laserstrahl 16 durchläuft die Linse 8 in deren Randbereich und wird in das Meßvolumen 15 fokussiert. Die Empfangslinse 9 richtet den Strahl wieder parallel zur optischen Achse, woraufhin er durch zwei Prismen 21 jeweils auf 90° umgelenkt wird und durch die Empfangslinse 9 in das Meßvolumen zurückfokussiert wird. Nach Durchlaufen der Linse 8 wird der Strahl in der Strahlfalle 19 abgeblockt. Die Detektion des Streulichts erfolgt auf der optischen Achse und ist in Figur 2 nicht dargestellt. Der in Figur 2 gezeigte Aufbau ist mit üblichen Gaslasern nur unter sehr erschwerten Bedingungen zu realisieren, weil diese in der Regel nur kleine Kohärenzlängen aufweisen. Die Verwendung von Laserdioden 1 mit nur einer longitudinalen Mode ermöglicht die großen Kohärenzlängen auch mit hoher Lichtleistung.

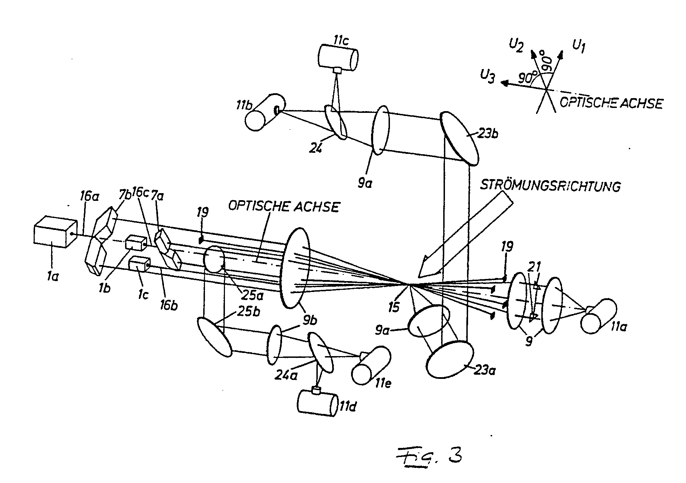

Figur 3 zeigt den Aufbau für die Messung von drei Geschwindigkeitskomponenten $u_1$, $u_2$ und $u_3$, die orthogonal zueinander stehen. Hierzu sind zwei Laserdioden 1b und 1c in der optischen Achse angeordnet. Ihre Strahlen 16a und 16c werden mittels um 90° zueinander gedrehten Strahlteilern 7a und 7b in parallele und paarweise orthogonal stehende Teilstrahlen gleicher Intensität aufgespaltet, die durch die Linse 8 in das Meßvolumen 15 fokussiert und nach Durchlaufen des Meßvolumens 15 durch Strahlfallen 19 abgeblockt werden. Mit diesen Strahlen können zueinander orthogonale Geschwindigkeitskomponenten $u_1$ und $u_2$ gemessen werden, die ihrerseits senkrecht zur optischen Achse stehen.

Zur Messung der in der optischen Achse liegenden Geschwindigkeitskomponente $u_3$ wird die anhand der Figur 2 erläuterte Anordnung verwendet, d. h. die Laserdiode 1a liegt außerhalb der optischen Achse. Die Detektion des vom Meßvolumen 15 ausgehenden Streulichts kann auf folgende Weisen erfolgen:

a) analog der in Figur 1 dargestellten Detektionsweise mit den Linsen 9 und einem in der optischen Achse liegenden Fotodetektor 11a für die Wellenlänge der Laserdiode 1b;

b) unter einem beliebigen Winkel gegen die optische Achse durch Fokussierung des Streulichts mittels der Linsen 9a sowie durch Umlenkung durch die Spiegel 23a und 23b. Durch einen Teiler 24 wird eine Farbteilung vorgenommen, durch die das verschieden frequente Licht der Laserdioden 1a und 1c voneinander getrennt wird. Diese Lichtanteile werden durch die Fotodetektoren 11b und 11c detektiert.

c) In Rückwärtsrichtung in der optischen Achse wird das Streulicht durch die Linse 8 fokussiert und durch die Spiegel 25a und 25b umgelenkt. Nach einer anschließenden Fokussierung durch die Linse 9b findet eine Farbteilung mittels des Teilers 24a der von den Laserdioden 1a und 1c ausgestrahlten Wellenlängen statt. Diese werden von den Fotodetektoren 11d und 11e erkannt.

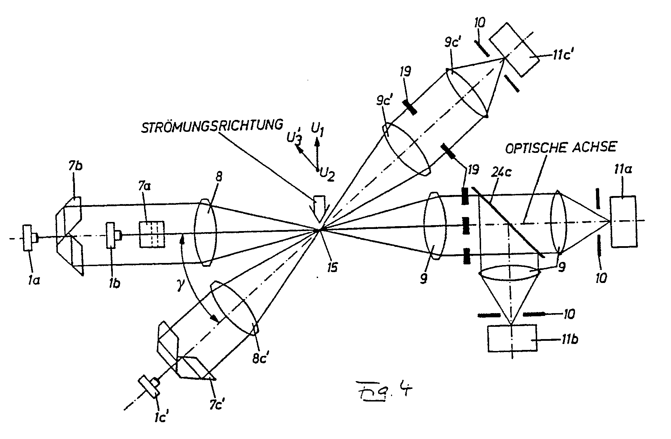

Figur 4 zeigt eine Ausführungsform, bei der eine dritte Geschwindigkeitskomponente $u_3$, gemessen wird, die nicht senkrecht auf den Geschwindigkeitskomponenten $u_1$ und $u_2$ steht. Die Anordnung der Laserdioden 1a und 1b mit ihren Strahlteilern 7a und 7b auf der optischen Achse ist die gleiche wie in Figur 3. Senkrecht zu der dritten Geschwindigkeitskomponente $u_3$, ist die optische Achse für die dritte Laserdiode 1c' mit ihrem Strahlteiler 7c' ausgerichtet. Die Fokussierung der Teilstrahlen findet durch eine Linse 8' in das Meßvolumen 15 statt. Empfangslinsen 9c' sammeln das Streulicht, das auf einen Fotodetektor 11c' durch eine Blende 10 gelangt, während die ungestreuten Strahlen in Strahlfallen 19 abgeblockt werden. Die optische Achse der Laserdioden 1a und 1b bildet mit der optischen Achse der Laserdiode 1c einen Winkel $\gamma$ von $< 90°$.

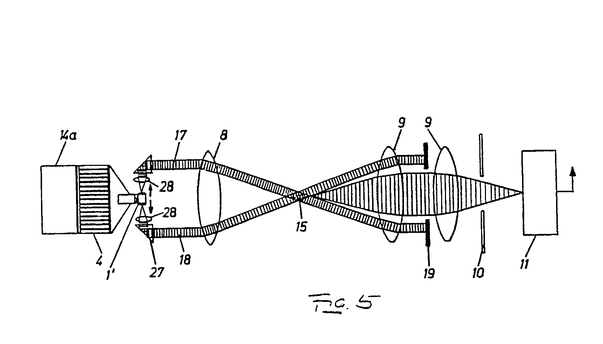

Figur 5 zeigt den Aufbau eines Anemometers, der dem Aufbau in Figur 1 entspricht, wobei jedoch die Laserdiode 1 durch eine Laser-Doppeldiode 1' ersetzt ist, die in zwei zueinander um $180°$ gedrehten Richtungen abstrahlt. Dadurch wird der Strahlteiler 7 entbehrlich, weil bereits aus der Laser-Doppeldiode 1' zwei geeignete Teilstrahlen 17,18 emittiert werden. Diese durchlaufen jeweils eine Sammellinse 26 und werden durch $90°$-Umlenkprismen 27 auf die Linse 8 geleitet, die die Teilstrahlen 17,18 auf das Meßvolumen 15 fokussiert. Der übrige Aufbau entspricht dem der Figur 1. Daher sind auch gleiche Teile mit gleichen Bezugsziffern versehen.

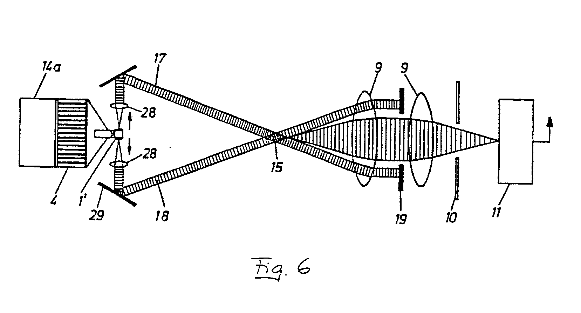

Figur 6 zeigt eine modifizierte Ausführungsform mit einer Laser-Doppeldiode 1', bei der die beiden Teilstrahlen 17,18 jeweils eine Sammellinse 28 durchlaufen, die im Zusammenwirken mit jeweils einem Umlenkspiegel 29 die Teilstrahlen 17,18 in das Meßvolumen 15 fokussieren.

Figur 7 zeigt noch eine Anordnung eines Laser-Doppler-Anemometers mit einer Laser-Doppeldiode 1' für die Messung der Bewegung einer Oberfläche 30 mittels des Referenzstrahlverfahrens. Die beiden divergenten Teilstrahlen 17,18 werden wiederum durch Sammellinsen 26 parallel gerichtet. Der Teilstrahl 17 durchläuft dann eine fokussierende Linse 8, die den Teilstrahl 17 auf die Oberfläche 30 fokussiert. Dabei durchläuft der Teilstrahl einen halbdurchlässigen $45°$-Spiegel 31, der das von der bewegten Oberfläche 30 reflektierte Licht über eine Empfangslinse 9 und eine Blende 10 auf den Fotomultiplier 11 leitet. Vor der Blende 10 durchläuft das Streulicht einen halbdurchlässigen Spiegel 32. Der zweite Teilstrahl 18 wird mit zwei $45°$-Spiegeln 33 um insgesamt $180°$ umgelenkt und mittels einer Linse 34 auf den Fotomultiplier 11 fokussiert. Der Referenzstrahl 18 wird über den halbdurchlässigen Spiegel 32 auf den Meßstrahl gekoppelt, so daß am Fotomultiplier 11 ein Interferenzmuster zwischen Streustrahl und Referenzstrahl entsteht. Da die Streuwelle angenähert kugelförmig entsteht, muß die Meßapparatur mit einer kleinen Apertur arbeiten, um interferenzfähige Strahlen zu erhalten.

Die erfindungsgemäße Ausbildung der Laserstrahlquellen durch Laserdioden 1,1',1a,1b,1c ermöglicht die Nachrüstung bestehender Laser-Doppler-Anemometer mit Gaslasern, die zur Untersuchung einer Geschwindigkeitskomponente aufgebaut sind, mit zwei Laserdioden-Anemometer zur Untersuchung dreier Geschwindigkeitskomponenten $u_1,u_2,u_3$, beispielsweise gemäß Figur 3, wobei die Laserstrahlquelle 1a als Gaslaser beibehalten werden kann. Ohne wesentliche räumliche Vergrößerung lassen sich daher bestehende Gaslaser-Anemometer zur Untersuchung von drei Geschwindigkeitskomponenten $u_1,u_2,u_3$ durch die erfindungsgemäßen Laser-Doppler-Anemometer mit Laserdioden erweitern.

## Patentansprüche

1. Laser-Doppler-Anemometer zur Messung von Geschwindigkeiten bewegter Meßobjekte (15, 30) mit einer durch wenigstens eine Laserdiode (1, 1a, 1b, 1c) gebildeten Laserstrahlquelle, einer Umlenkoptik für wenigstens zwei Teilstrahlen (17, 18), einer Sammeloptik (8) zur Fokussierung wenigstens eines der Teilstrahlen (17, 18) auf das Meßobjekt (15, 30) und mit einem Detektor (11) für das vom bewegten Meßobjekt (15, 30) ausgesandte Streulicht, **dadurch gekennzeichnet,** daß die Stabilisierung des aus der Laserdiode (1, 1a, 1b, 1c) austretenden Laserstrahls dadurch erfolgt, daß die Laserdiode (1, 1a, 1b, 1c) mit einem geregelten Konstantstrom betrieben und durch einen Temperaturregelkreis (12) auf einer konstanten Temperatur haltbar ist.

2. Laser-Doppler-Anemometer nach Anspruch 1, **dadurch gekennzeichnet,** daß die Laserdiode (1) auf einem Montageblock (2) montiert ist, in den ein Temperaturfühler und ein Element (3) zur stromgesteuerten Erzeugung von Wärme und Kälte eingebaut sind.

3. Laser-Doppler-Anemometer nach Anspruch 2, **dadurch gekennzeichnet,** daß zur Temperaturregelung des Montageblocks in diesen mindestens ein Peltier-Element (3) eingebaut ist.

4. Laser-Doppler-Anemometer nach einem der Ansprüche 1 bis 3, **dadurch gekennzeichnet,** daß die Laserstrahlquelle (1) im Monomode-Betrieb arbeitet.

5. Laser-Doppler-Anemometer nach einem der Ansprüche 1 bis 4, **dadurch gekennzeichnet,** daß zur Messung einer in der optischen Achse der Sammeloptik (8) liegenden Geschwindigkeitskomponente ($u_3$) eine Laserdiode (1c) außerhalb der optischen Achse angeordnet ist, deren Strahl durch die Sammeloptik (8) abgelenkt ein transparentes Meßvolumen (15) des Meßobjektes schräg zur optischen Achse und eine weitere Sammellinse (9) an deren Rand durchläuft und dadurch parallel zur optischen Achse ausgerichtet wird, anschließend zweimal umgelenkt wird und die weitere Sammellinse (9) am gegenüberliegenden Rand und daraufhin das Meßvolumen (15) schräg zur optischen Achse durchläuft und anschließend auf eine Strahlfalle (19) gerät, und daß ein Detektor (11d, 11e) für das in Richtung der optischen Achse liegende Streulicht vorgesehen ist.

6. Laser-Doppler-Anemometer nach einem der Ansprüche 1 bis 5, **dadurch gekennzeichnet,** daß zur Messung dreier Geschwindigkeitskomponenten ($u_1$, $u_2$, $u_3$) drei Laserstrahlquellen (1a, 1b, 1c) vorgesehen sind, daß das Licht zweier Laserstrahlquellen (1a, 1b) jeweils zwei Teilstrahlen bilden, die zueinander parallel verlaufen, wobei die Verbindungsebene der Teilstrahlen der einen Laserstrahlquelle (1a) einen Winkel mit der Verbindungsebene der Teilstrahlen der anderen Laserstrahlquelle (1b) einschließt, daß die beiden Laserstrahlquellen (1a, 1b) Laserstrahlen (16a, 16b) verschiedener Wellenlänge ausstrahlen, daß die detektierten Streulichtanteile in der Richtung der drei Geschwindigkeitskomponenten ($u_1$, $u_2$, $u_3$) durch Filter (24, 24a) voneinander trennbar sind und daß die dritte Laserstrahlquelle (1c) und wenigstens eine der beiden anderen Laserstrahlquellen (1a, 1b) durch Laserdioden gebildet sind.

7. Laser-Doppler-Anemometer nach Anspruch 6, **dadurch gekennzeichnet,** daß die dritte Laserstrahlquelle (1c) durch eine Laserdiode gebildet ist und gemäß Anspruch 6 angeordnet ist.

8. Laser-Doppler-Anemometer nach Anspruch 6, **dadurch gekennzeichnet,** daß die dritte Laserstrahlquelle (1c') mit dem zugehörigen Detektorsystem (9c', 11c') auf einer Achse liegt, die das Meßvolumen (15) schräg zur optischen Achse der Sammeloptik (8) für die beiden anderen Laserstrahlquellen (1a, 1b) durchläuft.

9. Laser-Doppler-Anemometer nach einem der Ansprüche 1 bis 8, **dadurch gekennzeichnet,** daß als Laserstrahlquelle eine Laser-Doppeldiode (1') dient, die auf einem gemeinsamen Substrat in um $180°$ zueinander stehende Richtungen abstrahlt.

**Claims**

1. A laser-Doppler-anemometer for measuring the speeds of moving objects (15,30) which are to be measured, comprising a laser beam source which is formed by at least one laser diode (1,1a,1b,1c), a deflecting optical system for at least two sub-beams (17,18), a collecting optical system (8) for focusing at least one of the sub-beams (17,18) onto the object to be measured (15,30), and a detector (11) for the scattered light emitted by the moving object to be measured (15,30), characterised in that the laser beam emitted by the laser diode (1,1a,1b,1c) is stabilised in that the laser diode (1,1a,1b,1c) is operated with a regulated constant current and can be maintained at a constant temperature by means of a temperature regulating circuit (12).

2. A laser-Doppler-anemometer as claimed in Claim 1, characterised in that the laser diode (1) is mounted on a mounting block (2) in which a temperature sensor and an element (3) for the current-controlled generation of heat and cold are incorporated.

3. A laser-Doppler-anemometer as claimed in claim 2, characterised in that for the temperature regulation of the mounting block, at least one Peltier element (3) is incorporated therein.

4. A laser-Doppler-anemometer as claimed in one of claims 1 to 3, characterised in that the laser beam source (1) operates in the mono-mode state.

5. A laser-Doppler-anemometer as claimed in one of Claims 1 to 4, characterised in that for the measurement of one speed component ($u_3$) located in the optical axis of the collecting optical system (8), one laser diode (1c) is arranged outside the optical axis, the beam of which laser diode (1c), having been deflected by the collecting optical system (8), passes through a transparent measurement zone (15) of the object to be measured obliquely to the optical axis and through a further collecting lens (9) at its edge and is thereby aligned in parallel to the optical axis, is then deflected twice, and passes through the further collecting lens (9) at the opposite edge and then through the measurement zone (15) obliquely to the optical axis and then reaches a beam trap (19), and that a detector (11d,11e) is provided for the scattered light occurring in the direction of the optical axis.

6. A laser-Doppler-anemometer as claimed in one of Claims 1 to 5, characterised in that for the measurement of three speed components ($u_1$, $u_2$, $u_3$,) three laser beam sources (1a,1b,1c) are provided, that the light of two laser beam sources (1a,1b) in each case forms two sub-beams which extend in parallel to one another, where the connection plane of the sub-beams of the first laser beam source (1a) forms an angle with the connection plane of the sub-beams of the other laser beam source (1b), that the two laser beam sources (1a, 1b) emit laser beams (16a,16b) of different wave lengths, that the detected scattered light components can be separated from one another by filters (24,24a) in the direction of the three speed components ($u_1$, $u_2$, $u_3$) and that the third laser beam source (1c) and at least one of the two other laser beam sources (1a,1b) are formed by laser diodes.

7. A laser-Doppler-anemometer as claimed in Claim 6, characterised in that the third laser beam source (1c) is formed by a laser diode and is arranged in accordance with Claim 6.

8. A laser-Doppler-anemometer as claimed in claim 6, characterised in that the third laser beam source (1c'), together with the associated detector system (9c',11c'), is arranged on an axis which passes through the measurement zone (15) obliquely to the optical axis of the collecting optical system (8) for the two other laser beam sources (1a,1b).

9. A laser-Doppler-anemometer as claimed in one of Claims 1 to 8, characterised in that the laser beam source comprises a laser double diode (1') which operates on a common substrate in directions extending at 180° to one another.

**Revendications**

1. Anémomètre Doppler laser pour mesurer des vitesses d'objets en mouvement (15, 30), comportant une source de faisceau laser formée par au moins une diode laser (1, 1a, 1b, 1c), une optique de déviation pour au moins deux faisceaux partiels (17, 18), une optique convergente (8) pour focaliser au moins un des faisceaux partiels (17, 18) sur l'objet de mesure (15, 30), et comportant un détecteur (11) pour la lumière diffuse émise par l'objet de mesure en mouvement (15, 30), caractérisé en ce que la stabilisation du faisceau laser issu de la diode laser (1, 1a, 1b, 1c) résulte du fait que la diode laser (1, 1a, 1b, 1c) est excitée par un courant constant régulé et peut être maintenue à une température constante par une boucle de régulation de température (12).

2. Anémomètre Doppler laser selon la revendication 1, caractérisé en ce que la diode laser (1) est montée sur un bloc de montage (2) dans lequel sont incorporés une sonde de température et un élément pour la production, commandée par un courant, de chaleur et de froid.

3. Anémomètre Doppler laser selon la revendication 2, caractérisé en ce que, pour réguler en température le bloc de montage, au moins un élément à effet Peltier (3) est incorporé à celui-ci.

4. Anémomètre Doppler laser selon l'une des revendications 1 à 3, caractérisé en ce que la source de faisceau laser (1) fonctionne en régime monomode.

**5.** Anémomètre Doppler laser selon l'une des revendications 1 à 4, caractérisé en ce que, pour mesurer une composante de vitesse ($u_3$) située dans l'axe optique de l'optique convergente (8), une diode laser (1c) est disposée en dehors de l'axe optique, le faisceau de cette diode laser étant dévié par l'optique convergente (8), traversant un volume de mesure transparent (15) de l'objet de mesure obliquement par rapport à l'axe optique, puis une autre lentille convergente (9), au bord de celle-ci, et étant ainsi orienté parallèlement à l'axe optique, ce faisceau étant ensuite dévié deux fois, traversant ladite autre lentille convergente (9) au bord opposé, puis le volume de mesure (15) obliquement par rapport à l'axe optique et atteignant ensuite un piège de faisceau (19), et en ce qu'un détecteur (11d, 11e) pour la lumière diffuse située dans la direction de l'axe optique est prévu.

**6.** Anémomètre Doppler laser selon l'une des revendications 1 à 5, caractérisé en ce que, pour mesurer trois composantes de vitesse ($u_1$, $u_2$, $u_3$), trois sources de faisceau laser (1a, 1b, 1c) sont prévues, en ce que la lumière de deux sources de faisceau laser (1a, 1b) forme chaque fois deux faisceaux partiels qui se propagent parallèlement entre eux, le plan défini par les faisceaux partiels d'une source de faisceau laser (1a) formant un angle avec le plan défini par les faisceaux partiels de l'autre source de faisceau laser (1b), en ce que les deux sources de faisceau laser (1a, 1b) émettent des faisceaux laser (16a, 16b) de longueurs d'onde différentes, en ce que les parties de lumière diffuse détectées dans la direction des trois composantes de vitesse ($u_1$, $u_2$, $u_3$) peuvent être séparées les unes des autres par des filtres (24, 24a), et en ce que la troisième source de faisceau laser (1c) et au moins une des deux autres sources de faisceau laser (1a, 1b) sont constituées par des diodes laser .

**7.** Anémomètre Doppler laser selon la revendications 6, caractérisé en ce que la troisième source de faisceau laser (1c) est constituée par une diode laser et est disposée selon la revendication 6.

**8.** Anémomètre Doppler laser salon la revendication 6, caractérisé en ce que la troisième source de faisceau laser (1c') est située, avec le système détecteur associé (9c' 11c'), sur un axe qui traverse le volume de mesure (15) obliquement par rapport à l'axe optique de l'optique convergente (8) pour les deux autres sources de faisceau laser (1a, 1b).

**9.** Anémomètre Doppler laser selon l'une des revendications 1 à 8, caractérisé en ce que comme source de faisceau laser, est utilisée une double diode laser (1') qui, sur un substrat commun, rayonne dans des directions faisant entre elles un angle de 180°.

Fig. 1

OPTISCHE ACHSE

Fig. 2

Fig. 3

Fig. 4

Fig. 5

Fig. 6

Fig. 7